# EUROPEAN PATENT SPECIFICATION

(11) **EP 0 711 052 B1**
(45) Date of publication and mention of the grant of the patent: **10.12.2003**
(21) Application number: 95307266.7
(22) Date of filing: 12.10.1995
(51) Int. Cl.: H04L 12/02

(54) **Improvements in or relating to telecommunication systems**
Verbesserung in oder in Bezug auf Telekommunikationssysteme(n)
Perfectionnement apporté à des systèmes de télécommunication

(30) Priority: 07.11.1994 GB 9422396; 31.07.1995 GB 9515676
(43) Date of publication of application: 08.05.1996
(73) Proprietor: SIEMENS PLC, Bracknell, Berkshire RG12 8FZ (GB)
(72) Inventor: Trought, Mark Timothy, Toton, Nottingham NG9 6JF (GB); Stagg, Larry Joseph, Nuneaton, Warwickshire CV13 0BU (GB); Boot, Gordon Philip, Cotgrave, Nottingham (GB); Perry, Adam Christopher, Hampshire SO53 3NY (GB)
(74) Representative: French, Clive Harry

(56) References cited:
- EP-A- 0 430 534
- WO-A-93/25026
- US-A- 5 079 763

## Description

The present invention relates to telecommunications systems and in particular the inter-connection of dissimilar telecommunications networks.

The continued advancement of telecommunications technology has led to the situation where dissimilar telecommunications networks must co-exist. This advancement has been driven largely by the demand for services that the user would like to have access to, from such telecommunications networks. For example, whilst the development of the narrow band Integrated Systems Digital Network (ISDN) standard has sufficed to satisfy the demand for digital speech telephony and some low bit rate data services, the demand for higher bit rate data services such as inter-computer communications, high quality audio, video telephony as well as speech in so called multi-media applications, has led to the development of broad band ISDN, based on the Asynchronous Transfer Mode (ATM) technology.

The inter-connection of telecommunications networks to allow terminals resident on different networks to communicate with each other, is becoming an important requirement.

Established digital telecommunications exchanges or switches, have been developed with call control facilities such as divert call when busy, conference call, redirect calls to another terminal, etc. An example of this might be a narrow-band ISDN switch, forming part of a Private Branch eXchange (PBX) already in use in many offices.

EP-A-0 430 534 discloses a system in which a telephone terminal may be assigned a telephone number normally assigned to a remote ('foreign') exchange. The terminal is connected to a local exchange, and the local exchange operates to enable the terminal to be connected via a dedicated line to the remote exchange when required.

The development of call control facilities for new telecommunications switches requires considerable effort and therefore expense. This would be particularly true, but not exclusively so, for an ATM switch. At present only simple call control facilities exist for ATM switches. The establishment of calls across an ATM switch require complex call control procedures. These procedures not only take into account the setting up of the route between the ingress and egress port of the switch, but also consider the bandwidth and Quality of Service (QoS) requirements needed. The development of call control facilities, that would provide the same facilities as established narrow band ISDN switches, would therefore represent a complex task involving great expense.

It is an object of the invention to provide call control facilities to a telecommunications switching means, in a cost effective manner.

According to the present invention, there is provided a telecommunications system comprising a first telecommunications switching means, a second telecommunications switching means, and a call inter working means associated with said first telecommunications switching means, characterised in that said call inter working means allows the call control means of said first telecommunications switching means to control said second telecommunications switching means.

Where there is a requirement to connect a local telecommunications switching means to a remote telecommunications switching means, such as that which would be required when connecting two dissimilar communications networks together, an inter working or bridging function could be used to interface between the two switches, translating layers two and three control messages and performing physical layer-one data adaptation as may be required. However, it will be readily appreciated by those skilled in the art, that by re-using the call processing software of the local telecommunications switching means, to control the connection of terminals on the remote telecommunications switching means, the inter working of the two said telecommunications switching means will be considerably simplified, and moreover, the development costs for the call control facilities for the remote telecommunications switching means will be saved.

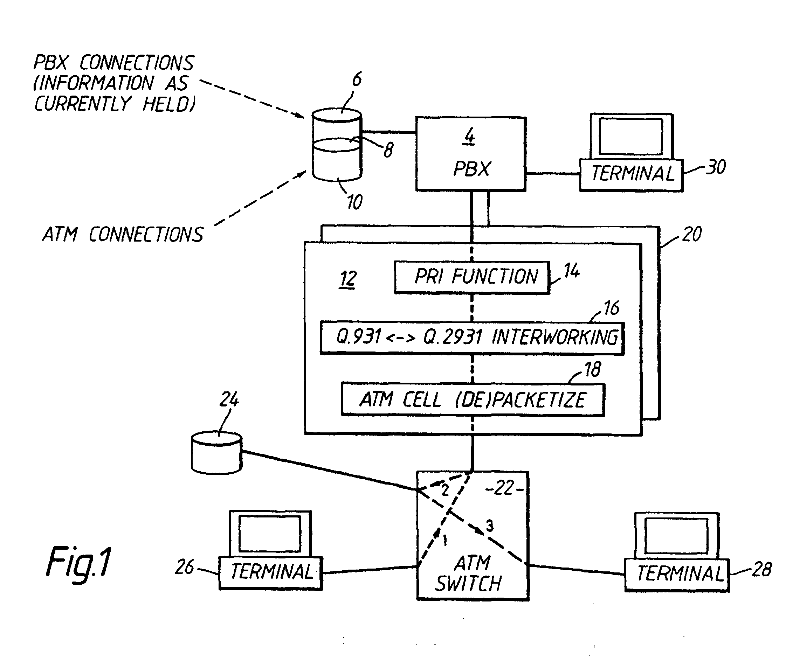

The invention will now be described by way of example only, with reference to the drawing in FIGURE 1, which shows a diagrammatic representation of a telecommunications system in which a PBX is used to configure an ATM switch.

ATM networks and switches support a mixture of traffic, including voice, video and data services. Many businesses already have PBX switches on their premises. With the introduction of ATM switches there is a requirement to inter work between an ATM switch and a PBX. The users of the services provided by the ATM network, will expect the same level of service and available functions, when a call is between a terminal on a PBX and a terminal on an ATM switch, or when a call is between two terminals connected across an ATM switch, as they currently enjoy when making a call between two terminals attached to the PBX.

The establishment of calls across an ATM switch require complex control procedures. These procedures not only take into account the setting up of the route of the ingress and egress port of the switch, but also consider the bandwidth and Quality of Service (QoS) requirements needed. The elements of a call are described in the ATM Forum UNI specification, version 3.0/3.1.

At present ATM switches have only simple call control facilities when compared to the type of call control facilities that are available on PBXs. These have features such as, divert the call when busy, conference call, redirect calls to another terminal, and if the call parties line is busy, get the PBX to call the callers line when the call party is free.

These and many other features of the PBX would add benefit to a call which uses an ATM switch. PBX and ATM switches both have their own call control software. Due to the length of time PBXs have existed, the functions that have been added to them, and functions that are now expected of them are complex. The re-routing of calls and call destination processing requires complex control procedures. ATM switches are relatively new for networking purposes. None of the existing products can offer genuine voice connections which may also pass across to a PBX or the public network. Making use of data connections between a PBX and an ATM switch with an appropriate inter working functions is almost certainly an obvious next step to take. However, to re-use the call processing software of a PBX to enhance the control of an ATM switch is not.

In Figure 1, a Private Branch Exchange 4 is shown with its connection table 6, divided between those accorded to the PBX terminals 8, and those accorded to the connections of the ATM switch 10. Connected to the PBX 4, is the call inter working unit 12, comprising a primary rate interface 14, connected to a signalling inter working unit 16, which is connected to the ATM cell packetizer and depacketizer which is subsequently connected to an ATM switch 22. Also connected between the PBX and the ATM switch is a data inter working unit 20. Connected to the ATM switch 22 is the unit in which the ATM call control functions are stored 24. Also shown connected to the ATM switch is an example of two terminal connections 26, 28. A terminal 30 is also shown connected to the PBX 4.

The connections table 6 of the PBX 4, is shown with those table entries belonging purely to the PBX 8, and those table entries belonging to all possible connections on the ATM switch 10. Hence, in operation, the PBX sees the connections belonging to the ATM switch as extensions of its own call processing table. In this way, every time a connection needs establishing, the processing is completed in the PBX call processor with the call inter working unit 12 acting between the PBX call processor and the ATM call processor, in order that each receives the call control messages that it would have expected to have received from a terminal connected to it.

The call inter working unit 12 receives call control signalling information from the PBX which is fed into the primary rate interface unit 14, which time division de-multiplexes the signalling information from the common signalling channel, according to the physical layer-one data format of the PBX. The call control signalling messages are then passed from the primary rate interface 14, to the signalling inter working unit 16. The PBX call processing is compliant with various national and international standards, including the ITU recommendations Q.931, the ATM switch is compliant with the ITU draft recommendations Q.2931. The signalling inter working unit 16, therefore converts messages received in the Q.931 format, from the PBX, into the Q.2931 format, and from the Q.2931 format received from the ATM switch, into the Q.931 format, in the other direction. The signalling inter working unit 16, is connected at the other side to an ATM cell packetizer/depacketizer 18. This unit 18 takes signalling messages in the Q.2931 format, and packs them into ATM cells, so that they can be received and correctly interpreted as call control signalling by the ATM switch 22. In the other direction, unit 18 retrieves the signalling information from the ATM switch, in the form of ATM cells, and passes it to the signalling inter working unit 16.

Within the ATM switch 22, the call control messages received from the call inter working unit 12 are passed to the ATM switch call control functions unit 24. This is a layer-two unit responsible for configuring the fabric of the ATM switch according to the call requirements of the call and caller parties. The parameters of the call will be such things as the ATM Virtual Connection Identifier/Virtual Path Identifier value, quality of service definition as given in the ATM Forum UNI specification 3.0/3.1 or other international standards body definition, and the bandwidth requirements of the calling parties.

Calling parties are identified generically as terminals attached to the ATM switch shown as units 26, 28. The attributes of all terminals of which units 26, 28 are merely examples, are therefore stored in the ATM switch call control functions unit 24. Hence, the unit 24 is able to determine whether a call may proceed, depending on whether the party to be called and the caller support compatible services. For example the unit 24 determines whether the call may proceed, if the peak and mean bit rates, and delay constraints required for the call by the terminal 26 are able to be supported by the terminal 28.

Equally, a call connection request may occur between a terminal attached to the ATM switch 26, and one attached to the PBX. In this case, and where the calling terminal and the terminal to be called support compatible services, a data inter working unit 20, will be used to convert data between the ATM cell format and the Pulse Code Modulated (PCM) synchronous time division multiplexed format of the PBX, at the physical layer-one.

In operation, the higher layer-three call control functionality is performed by the PBX switch 4, within its call control function 6. So that, if for example, the terminal 26 wishes to call the terminal 28, it initiates a connection request indicated by the arrow 1. This request is translated into the correct signalling format by the call inter working unit 12, made up of the elements described above, so that the connection request received by the PBX, appears to the PBX as being a request from a terminal that is an extension of the PBX, as given in the call control function unit 10. If the extension that the terminal unit 26 wishes to call is 'on-hook' and therefore available, the PBX will respond with signalling messages that will inform the terminal 26, that it sees as one of its own extensions, to proceed and set up the call. The PBX is also unaware that the terminal 28 to be called, is attached to the ATM switch 22, and simply sees this as one of its own extensions. The signalling information to tell the terminal 26 to proceed, is then converted back to the correct signalling format for the ATM switch 22 by the call inter working unit 12, and being call control information is passed to the ATM switch call control functions unit 24. This is shown by the arrow 2. This unit then proceeds to configure the ATM switch so that the connection between the terminals 26, 28 may proceed. This is signalled to the terminal 28, by the ATM call control functions unit 24, as shown by the arrow 3. However, it is possible at this point that on consultation of the communication attributes of the call for the terminal 28, stored in the ATM switch call control functions unit 24, that the call may not proceed, because the terminal 28 is not able to support the call communication attributes of the service required by the terminal 26. If this is the case, then a corresponding message can be sent back to the PBX, via the call inter working unit 12, informing it that the connection has been rejected, and amending the call control functions table 6, to record this fact.

It will be appreciated that within the scope of the invention, the PBX could be any telecommunications switching means with existing call control functionality, such as an ISDN switch within the public switched telephone network, and that the ATM switching means could be any telecommunications switching means such as the Hub (bridge, brouter, router or gateway) switch of an Ethernet Local Area Network (LAN) and that the call inter working means could be any such means appropriate for converting the call control signalling from the first telecommunications switching means into the appropriate call control or management protocol for the second telecommunications switching means.

## Claims

1. A telecommunications system comprising a first telecommunications switching means (4), a second telecommunications switching means (22) and a call inter working means (12) associated with said first telecommunications switching means (4); **characterised in that** said call inter working means (12) allows the call control means of said first telecommunications switching means (4) to control said second telecommunications switching means (22).

2. A telecommunications system as claimed in Claim 1, wherein the first telecommunications switching means (4) includes a connection table (6) containing reference to at least one of the terminals (26, 28) attached to said second telecommunications switching means as extensions of said first telecommunications switching means.

3. A telecommunications system as claimed in Claim 1 or Claim 2, in which said call inter working means (12) comprises at least a first primary rate interface means (14), a signalling inter working means (16) and a second primary rate interface means (18); wherein that said first primary rate interface means retrieves the signalling or control messages delivered by said first telecommunications switching means according to the physical layer data format of said first telecommunications switching means, and also converts signalling or control messages intended for said first telecommunications switchin g means from said si g nallin g inter workin g means into the physical layer data format of said first telecommunications switching means, and wherein said signalling inter working means translates the signalling or control messages of said first telecommunications switching means into signalling or control messages of said second telecommunications switching means, and also translates the signalling or control messages of said second telecommunications switching means into signalling or control messages of said first telecommunications switching means; and wherein said second primary rate interface means retrieves the signalling or control messages delivered by said second telecommunications switching means according to the physical layer data format of said second telecommunications switching means, and also converts signalling or control messages intended for said second telecommunications switching means from said signalling inter working means into the physical layer data format of said second telecommunications switching means, so that said call inter working means allows the call control signalling from said first telecommunications switching means to control said second telecommunications switching means.

4. A telecommunications system as claimed in Claim 3, in which there is a data inter working means comprising means for converting the physical layer data format of said first telecommunications switching means into the physical layer data format of said second telecommunications switching means and for converting the physical layer data form at of said second telecommunications switching means into the physical layer data format of said first telecommunications switching means, so that communication can be effected between two compatible terminals, capable of communication, where one terminal is attached to said first telecommunications switching means and the other terminal attached to said second telecommunications switching means.

5. A telecommunications system as claimed in any preceding claim, wherein said second telecommunication switching means is an ATM switch.

6. A telecommunications system as claimed in any preceding claim 1 to 4, wherein said second telecommunications switching means is a Local Area Network Hub.

7. A telecommunications system as claimed in any preceding claim 1 to 4, wherein said second telecommunications switching means is a broad band ISDN switch.

8. A telecommunications system as claimed in any preceding claim, wherein the first telecommunications switching means is a narrow band ISDN switch.

9. A telecommunications system as claimed in any of claims 1 to 5 and 8, in which said first primary rate interface means of said call inter working means is a time division multiplexer/demultiplexer adapted for connection to a narrow-band ISDN switch.

10. A telecommunications system as claimed in any of claims 1 to 5 and 8, in which said signalling inter working means of said call inter working means converts signalling messages of a narrow band ISDN switch according to Q.931 format into signalling messages of an ATM switch according to Q.2931 format and which converts signalling messages of said ATM switch according to Q.2931 format into signalling messages of said narrow band ISDN switch according to Q.931 format.

11. A telecommunications system as claimed in any of claims 1 to 5 and 8, in which said second primary rate interface means of said call inter working means is an ATM cell packetizer/depacketizer adapted for connection to an ATM switch.

## Patentansprüche

1. Fernmeldeanlage, welche ein erstes Fernmeldevermittlungsmittel (4), ein zweites Fernmeldevermittlungsmittel (22) und ein mit dem ersten Fernmeldevermittlungsmittel (4) verknüpftes Verbindungsübergangsmittel (12) umfasst, **dadurch gekennzeichnet, dass** das besagte Verbindungsübergangsmittel (12) ermöglicht, dass das Verbindungssteuerungsmittel des besagten ersten Fernmeldevermittlungsmittels (4) das besagte zweite Fernmeldevermittlungsmittel (22) steuert.

2. Fernmeldeanlage nach Anspruch 1, wobei das erste Fernmeldevermittlungsmittel (4) eine Verbindungstabelle (6) umfasst, die einen Bezug auf wenigstens eines der an das besagte zweite Fernmeldevermittlungsmittel angeschlossenen Endgeräte (26, 28) als auf eine Nebenstelle des besagten ersten Fernmeldevermittlungsmittels enthält.

3. Fernmeldeanlage nach Anspruch 1 oder Anspruch 2, in welcher das besagte Verbindungsübergangsmittel (12) wenigstens ein erstes Primärmultiplexanschluss-Mittel (14), ein Signalisierungs-Übergangsmittel (16) und ein zweites Primärmultiplexanschluss-Mittel (18) umfasst, wobei jenes besagte erste Primärmultiplexanschluss-Mittel die Signalisierungs- oder Steuerungsnachrichten, die von dem besagten ersten Fernmeldevermittlungsmittel entsprechend dem Datenformat der physikalischen Schicht des besagten ersten Fernmeldevermittlungsmittels geliefert werden, zurückgewinnt und außerdem für das besagte erste Fernmeldevermittlungsmittel bestimmte Signalisierungs- oder Steuerungsnachrichten von dem besagten Signalisierungs-Übergangsmittel in das Datenformat der physikalischen Schicht des besagten ersten Fernmeldevermittlungsmittels umwandelt, und wobei das besagte Signalisierungs-Übergangsmittel die Signalisierungs- oder Steuerungsnachrichten des besagten ersten Fernmeldevermittlungsmittels in Signalisierungs- oder Steuerungsnachrichten des besagten zweiten Fernmeldevermittlungsmittels umsetzt und außerdem die Signalisierungs- oder Steuerungsnachrichten des besagten zweiten Fernmeldevermittlungsmittels in Signalisierungs- oder Steuerungsnachrichten des besagten ersten Fernmeldevermittlungsmittels umsetzt; und wobei das besagte zweite Primärmultiplexanschluss-Mittel die Signalisierungs- oder Steuerungsnachrichten, die von dem besagten zweiten Fernmeldevermittlungsmittel entsprechend dem Datenformat der physikalischen Schicht des besagten zweiten Fernmeldevermittlungsmittels geliefert werden, zurückgewinnt und außerdem für das besagte zweite Fernmeldevermittlungsmittel bestimmte Signalisierungs- oder Steuerungsnachrichten von dem besagten Signalisierungs-Übergangsmittel in das Datenformat der physikalischen Schicht des besagten zweiten Fernmeldevermittlungsmittels umwandelt, so dass das besagte Verbindungsübergangsmittel es ermöglicht, dass die Verbindungssteuerungs-Signalisierung von dem besagten ersten Fernmeldevermittlungsmittel das besagte zweite Fernmeldevermittlungsmittel steuert.

4. Fernmeldeanlage nach Anspruch 3, in welcher eine Datenübergangseinheit vorhanden ist, welche Mittel zur Umwandlung des Datenformates der physikalischen Schicht des besagten ersten Fernmeldevermittlungsmittels in das Datenformat der physikalischen Schicht des besagten zweiten Fernmeldevermittlungsmittels und zur Umwandlung des Datenformates der physikalischen Schicht des besagten zweiten Fernmeldevermittlungsmittels in das Datenformat der physikalischen Schicht des besagten ersten Fernmeldevermittlungsmittels umfasst, so dass eine Kommunikation zwischen zwei zur Kommunikation fähigen kompatiblen Endgeräten realisiert werden kann, wobei ein Endgerät an das besagte erste Fernmeldevermittlungsmittel angeschlossen ist und das andere Endgerät an das besagte zweite Fernmeldevermittlungsmittel angeschlossen ist.

5. Fernmeldeanlage nach einem der vorhergehenden Ansprüche, wobei das besagte zweite Fernmeldevermittlungsmittel eine ATM-Vermittlung ist.

6. Fernmeldeanlage nach einem der vorhergehenden Ansprüche 1 bis 4, wobei das besagte zweite Fernmeldevermittlungsmittel ein Hub eines lokalen Netzes ist.

7. Fernmeldeanlage nach einem der vorhergehenden Ansprüche 1 bis 4, wobei das besagte zweite Fernmeldevermittlungsmittel eine Breitband-ISDN-Vermittlung ist.

8. Fernmeldeanlage nach einem der vorhergehenden Ansprüche, wobei das erste Fernmeldevermittlungsmittel eine Schmalband-ISDN-Vermittlung ist.

9. Fernmeldeanlage nach einem der Ansprüche 1 bis 5 und 8, in welcher das besagte erste Primärmultiplexanschluss-Mittel des besagten Verbindungsübergangsmittels ein Zeitmultiplexer/Demultiplexer ist, der für den Anschluss an eine Schmalband-ISDN-Vermittlung geeignet ist.

10. Fernmeldeanlage nach einem der Ansprüche 1 bis 5 und 8, in welcher das besagte Signalisierungs-Übergangsmittel des besagten Verbindungsübergangsmittels Signalisierungsnachrichten einer Schmalband-ISDN-Vermittlung im Q.931 Format in Signalisierungsnachrichten einer ATM-Vermittlung im Q.2931 Format umwandelt und Signalisierungsnachrichten der besagten ATM-Vermittlung im Q.2931 Format in Signalisierungsnachrichten der besagten Schmalband-ISDN-Vermittlung im Q.931 Format umwandelt.

11. Fernmeldeanlage nach einem der Ansprüche 1 bis 5 und 8, in welcher das besagte zweite Primärmultiplexanschluss-Mittel des besagten Verbindungsübergangsmittels ein ATM-Zellen-Paketierer/Depaketierer ist, der für den Anschluss an eine ATM-Vermittlung geeignet ist.

## Revendications

1. Système de télécommunications comprenant un premier moyen de commutation en télécommunications (4), un second moyen de commutation en télécommunications (22) et un moyen d'interfonctionnement d'appels (12) associé audit premier moyen de commutation en télécommunications (4), **caractérisé en ce que** ledit moyen d'interfonctionnement d'appels (12) permet au moyen de commande d'appel dudit premier moyen de commutation en télécommunications (4) de commander ledit second moyen de commutation en télécommunications (22).

2. Système de télécommunications selon la revendication 1, dans lequel le premier moyen de commutation en télécommunications (4) comprend une table de connexions (6) contenant une référence à au moins l'un des deux terminaux (26, 28) rattachés audit second moyen de commutation en télécommunications sous la forme de postes supplémentaires dudit premier moyen de commutation en télécommunications.

3. Système de télécommunications selon la revendication 1 ou 2, dans lequel ledit moyen d'interfonctionnement d'appels (12) comprend au moins un premier moyen (14) formant interface à débit primaire, un moyen d'interfonctionnement en signalisation (16) et un second moyen (18) formant interface à débit primaire, dans lequel ledit premier moyen formant interface à débit primaire récupère les messages de signalisation ou de commande émis par ledit premier moyen de commutation en télécommunications conformément au format de données de la couche physique dudit premier moyen de commutation en télécommunications, et convertit aussi les messages de signalisation ou de commande destinés audit premier moyen de commutation en télécommunications, provenant dudit moyen d'interfonctionnement en signalisation, dans le format de données de couche physique dudit premier moyen de commutation en télécommunications, et dans lequel ledit moyen d'interfonctionnement en signalisation traduit les messages de signalisation ou de commande dudit premier moyen de commutation en télécommunications en messages de signalisation ou de commande dudit second moyen de commutation en télécommunications, et traduit aussi les messages de signalisation ou de commande dudit second moyen de commutation en télécommunications en messages de signalisation ou de commande dudit premier moyen de commutation en télécommunications, et dans lequel ledit second moyen formant interface à débit primaire récupère les messages de signalisation ou de commande émis par ledit second moyen de commutation en télécommunications conformément au format de données de la couche physique dudit second moyen de commutation en télécommunications, et convertit aussi les messages de signalisation ou de commande destinés audit second moyen de commutation en télécommunications, provenant dudit moyen d'interfonctionnement en signalisation, dans le format de données de couche physique dudit second moyen de commutation en télécommunications, de telle sorte que ledit moyen d'interfonctionnement d'appels permette aux signaux de commande d'appel dudit premier moyen de commutation en télécommunications de commander ledit second moyen de commutation en télécommunications.

4. Système de télécommunications selon la revendication 3, dans lequel il y a un moyen d'interfonctionnement de données comprenant des moyens pour convertir le format de données de couche physique dudit premier moyen de commutation en télécommunications dans le format de données de couche physique dudit second moyen de commutation en télécommunications et pour convertir le format de données de couche physique dudit second moyen de commutation en télécommunications dans le format de données de couche physique dudit premier moyen de commutation en télécommunications, de telle sorte que la communication puisse être établie entre deux terminaux compatibles, capables de communiquer, l'un des terminaux étant rattaché audit premier moyen de commutation en télécommunications et l'autre terminal étant rattaché audit second moyen de commutation en télécommunications.

5. Système de télécommunications selon l'une quelconque des revendications précédentes, dans lequel ledit second moyen de commutation en télécommunications est un commutateur MTA.

6. Système de télécommunications selon l'une quelconque des revendications 1 à 4, dans lequel ledit second moyen de commutation en télécommunications est un concentrateur de réseau local.

7. Système de télécommunications selon l'une des revendications 1 à 4, dans lequel ledit second moyen de commutation en télécommunications est un commutateur RNIS à large bande.

8. Système de télécommunications selon l'une quelconque des revendications précédentes, dans lequel le premier moyen de commutation en télécommunications est un commutateur RNIS à bande étroite.

9. Système de télécommunications selon l'une quelconque des revendications 1 à 5 et 8, dans lequel ledit premier moyen formant interface à débit primaire dudit moyen d'interfonctionnement d'appels est un multiplexeur-démultiplexeur à répartition dans le temps adapté pour être connecté à un commutateur RNIS à bande étroite.

10. Systèmes de télécommunications selon l'une quelconque des revendications 1 à 5 et 8, dans lequel ledit moyen d'interfonctionnement en signalisation dudit moyen d'interfonctionnement d'appels convertit les messages de signalisation d'un commutateur RNIS à bande étroite suivant le format Q.931 en messages de signalisation d'un commutateur MTA suivant le format Q.2931 et qui convertit les messages de signalisation dudit commutateur MTA suivant le format Q.2931 en messages de signalisation dudit commutateur RNIS à bande étroite suivant le format Q.931.

11. Système de télécommunications selon l'une quelconque des revendications 1 à 5 et 8, dans lequel ledit second moyen formant interface à débit primaire dudit moyen d'interfonctionnement d'appels est un assembleur-désassembleur de paquets de cellules MTA adapté pour être connecté à un commutateur MTA.
